# EUROPEAN PATENT APPLICATION

(11) **EP 3 989 543 A1**
(43) Date of publication of application: **27.04.2022**
(21) Application number: 21199074.2
(22) Date of filing: 27.09.2021
(51) Int. Cl.: H04N 17/00, G03B 43/00

(54) **DEVICE FOR DETERMINING A CHARACTERISTIC OF A CAMERA**

(30) Priority: 20.10.2020 US 202017075645
(71) Applicant: Aptiv Technologies Limited, 14004 St. Michael (BB)
(72) Inventor: GARNER, Timothy D., Cicero, 46034 (US); BAAR, James C., Logansport, 46947 (US); TAYLOR, Ronald M., Greentown, 46936 (US); FAULKS, Nathan R., Westfield, 46074 (US); CZERNIAWSKI, Marcin, 82-242 Keblowo (PL)
(74) Representative: Westphal, Mussgnug & Partner, Patentanwälte mbB

(57) **Abstract**

The techniques of this disclosure relate to a device for determining a characteristic of a camera. The device includes a moveable fixture operable to position a target in a field of view of a camera. A face of the target has linear regions of interest, and the face is normal to a line of sight of the camera. The moveable fixture is configured to rotate the target about a center of the face to adjust an angle of the linear regions of interest relative to a horizontal axis and a vertical axis of the field of view, thereby enabling a determination of a characteristic of the camera based on the linear regions of interest. Target rotation angles can be determined for any camera field position and indexed automatically to improve testing efficiencies while increasing the number of target positions that are characterized in the camera's field of view.

## Description

Cameras, especially wide-field cameras for advanced driver-assistance systems (ADAS), may be tested and evaluated at a relatively small set of regions of interest (ROI) within the camera's field of view and may require unique test targets and complex, expensive test setups. Challenges are associated with testing cameras, particularly when testing at focal distances compatible with environmental test chambers, and in compensating during a test for inherent image distortion in the camera's field of view. In some instances, each position tested in the camera's field of view may require a unique target geometry to compensate for this image distortion. In some examples, a unique target is tailored for each target location, which can result in a significant number of individual targets *(e.g.,* 10-20 targets) to effectively map the camera's image space, thereby lengthening the time to complete a test and increasing the test's complexity.

This document describes one or more aspects of a device for determining a characteristic of a camera. In one example, a device includes a moveable fixture operable to position a target in a field of view of a camera. A face of the target has linear regions of interest (ROI) and is normal to a line of sight of the camera. The moveable fixture is configured to rotate the target about a center of the face to adjust an angle of the linear regions of interest relative to a horizontal axis and a vertical axis of the field of view. The rotation of the target enables a determination of a characteristic of the camera based on the linear regions of interest.

In another example, a system includes a processor configured to receive image data representing captured images of a target from a plurality of cameras. The processor is also configured to adjust a position of the target in fields of view of the plurality of cameras. The processor is also configured to determine a rotation angle of linear ROI viewable on a face of the target to enable a determination of modulation transfer functions (MTF) of the plurality of cameras. The processor is also configured to adjust the rotation angle relative to horizontal and vertical axes of the fields of view and determine the MTF of the plurality of cameras based on the linear ROI.

In another example, a method includes positioning, with a moveable fixture, a target in a field of view of a camera. A face of the target has linear ROI and is normal to a line of sight of the camera. The method also includes rotating, with the moveable fixture, the target about a center of the face to adjust an angle of the linear ROI relative to a horizontal axis and a vertical axis of the field of view. The rotation of the target enables a determination of a characteristic of the camera based on the linear ROI.

This summary is provided to introduce aspects of a device for determining a characteristic of a camera, which is further described below in the Detailed Description and Drawings. For ease of description, the disclosure focuses on vehicle-based or automotive-based systems, such as those that are integrated on vehicles traveling on a roadway. However, the techniques and systems described herein are not limited to vehicle or automotive contexts, but also apply to other environments where cameras can be used to detect objects. This summary is not intended to identify essential features of the claimed subject matter, nor is it intended for use in determining the scope of the claimed subject matter.

The details of one or more aspects of a device for determining a characteristic of a camera are described in this document with reference to the following drawings. The same numbers are used throughout the drawings to reference like features and components:
FIG. 1 illustrates an example device configured to determine a characteristic of a camera.
FIGS. 2A-2C illustrate example plots of an edge spread function, a line spread function, and a modulation transfer function that is a characteristic of the camera.
FIGS. 3A-3C illustrate an example moveable fixture of the example device of FIG. 1.
FIGS. 4A-4D illustrate example targets of the example moveable fixture of FIGS. 3A-3C.
FIGS. 5A-5C illustrate example distortions of the example target of FIG. 4A.
FIGS. 6A-6B illustrate examples of target rotation performed by an example processor of the example device of FIG. 1.
FIG. 7 is a flow chart illustrating an example process flow for determining the characteristic of the camera.
FIG. 8 is a flow chart illustrating an example process flow for determining a rotation angle of the target.
FIG. 9 is a flow chart illustrating an example process flow for determining an edge angle of the target.
FIG. 10 illustrates an example method of determining a characteristic of a camera.

The techniques of this disclosure relate to a device for determining a characteristic of a camera. A modulation transfer function (MTF) is a measure of an image quality characteristic of the camera and is an industry-accepted metric for characterizing advanced driver-assistance systems (ADAS) cameras for automotive applications. The typical MTF characterization of a camera image includes sampling image data from several different positions or locations across a field of view of the camera. A specialized target is used in the MTF measurements, the geometry of which depends on a particular MTF measurement protocol that is being used to characterize the camera. Some MTF measurements use targets having a pinhole or a slit, while others use targets having straight lines. Image distortion, caused by camera lens curvature and other optical properties of the camera or camera system, varies across the field of view and typically requires unique target geometries positioned in the field of view to compensate for the distortion. That is, a pre-distorted target is placed in a particular position in the field of view such that the image captured by the camera appears undistorted. Creating these unique target geometries is time-consuming and limits the total number of regions of interest that can be evaluated for a complete mapping of the camera's image space. Cameras that have wider fields of view (for example, ADAS cameras) typically have more distortion in the wide-field regions than do cameras with narrower fields of view. In some examples, a unique target is tailored for each target location, which can result in a significant number of individual targets (*e.g.*, 10-20 targets) to effectively map the camera's image space.

This disclosure introduces a device for determining a characteristic of a camera. Described is a camera target simulator for MTF measurements at all locations within the field of view of the camera. A target geometry to compensate for inherent image distortion using target rotation is also disclosed. Target rotation angles can be determined for any camera field position and indexed automatically to improve testing efficiencies while increasing the number of target positions that are characterized in the camera's field of view.

### EXAMPLE DEVICE

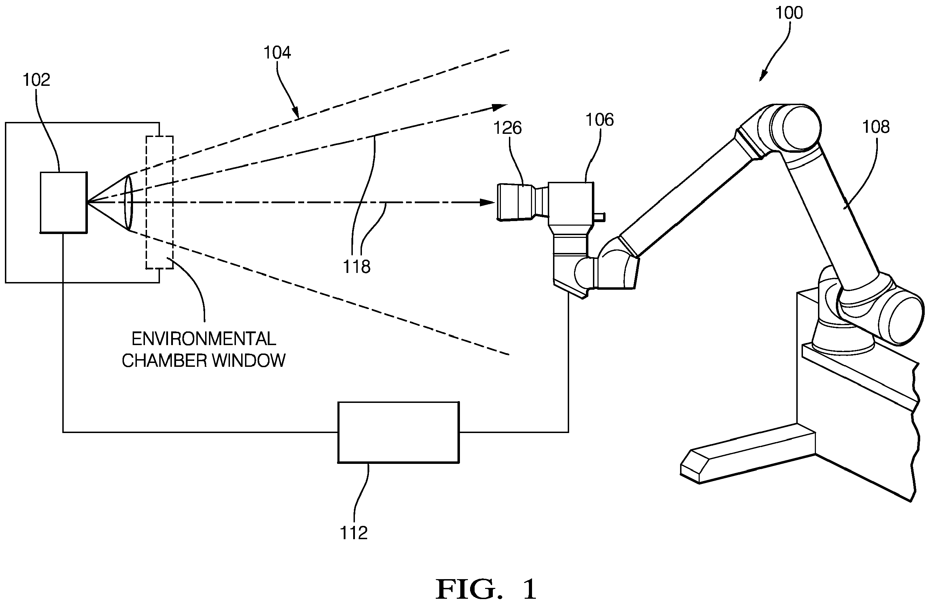

FIG. 1 illustrates an example device 100 for determining a characteristic of a camera 102. One such characteristic is the MTF, which is a measure of an image quality of the camera 102, which will be explained in more detail below. In an example implementation, the device 100 is placed within a test cell (not shown) in a field of view 104 of one or more cameras 102. The one or more cameras 102 may be located inside an environmental chamber with a view through a transparent environmental chamber window to the test cell. The environmental chamber may control any one of a temperature and a humidity of the environment to which the one or more cameras are exposed. Typically, cameras for automotive applications are required to function at temperatures ranging from -40 degrees Celsius (°C) to 125 °C and at humidity levels ranging from 0% to 95% relative humidity. The one or more cameras 102 may be any cameras 102 suitable for use in automotive applications, for example, ADAS applications and/or occupant detection applications. The one or more cameras 102 include optics that may include one or more fixed-focus lenses. The one or more cameras 102 include an image sensor, comprised of a two-dimensional array of pixels organized into rows and columns that define a resolution of the camera 102. The pixels may be comprised of a Charge Coupled Device (CCD) and/or a Complementary Metal Oxide Semiconductor (CMOS) that convert light into electrical energy based on an intensity of the light incident on the pixels.

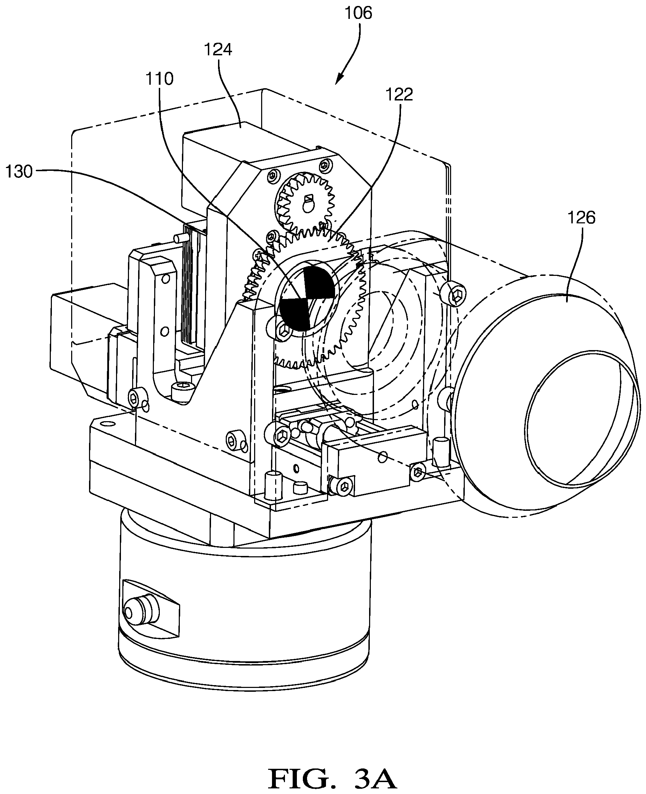

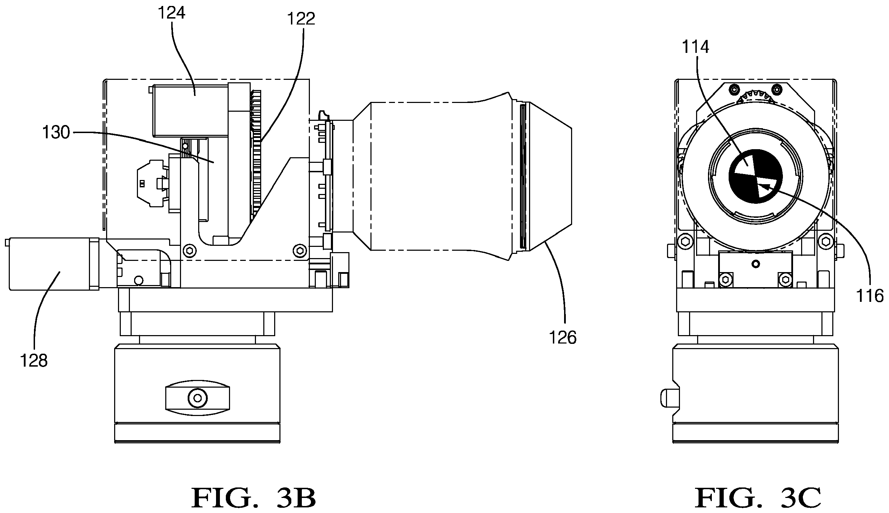

The device 100 includes a moveable fixture 106, which in some examples, includes a robotically controlled arm 108 configured to mount and position the moveable fixture 106 within the field of view 104 of the camera 102. The robotically controlled arm 108 may include one or more articulating joints that enable the device 100 to position the moveable fixture 106 at angles relative to the field of view 104, as will be explained in more detail below. In the example illustrated in FIG. 1, the moveable fixture is operable to position a target 110 (see FIG. 3A) in the field of view 104 of the camera 102 by positioning the target 110 at a first distance from the camera 102 in the test cell. The first distance selected to be representative of a second distance in a vehicle coordinate system (not shown) from which the camera 102 can be tested under conditions that simulate actual field conditions. As such, the first distance is often shorter than the second distance. This shorter first distance is advantageous because testing under actual field conditions would require extremely large test cells to reproduce the field conditions. For example, the target may be positioned at the first distance of one meter away from the camera 102 in the test cell, which may translate to the second distance of ten meters away from the camera 102, when the camera 102 is installed on the vehicle and operating in the field.

In the example illustrated in FIG. 1, the device 100 further includes a processor 112 communicatively coupled with the moveable fixture 106 and the one or more cameras 102. The processor 112 is configured to receive image data from the one or more cameras 102, representing a captured image of the target 110 retained by the moveable fixture 106. The processor 112 may be implemented as a microprocessor or other control circuitry such as analog and/or digital control circuitry. The control circuitry may include one or more application-specific integrated circuits (ASICs) or field-programmable gate arrays (FPGAs) that are programmed to perform the techniques or may include one or more general-purpose hardware processors programmed to perform the techniques in accordance with program instructions in firmware, memory, other storage, or a combination thereof. The processor 112 may also combine custom hardwired logic, ASICs, or FPGAs with custom programming to accomplish the techniques. The processor 112 may include a memory or storage media (not shown), including nonvolatile memory, such as electrically erasable programmable read-only memory (EEPROM) for storing one or more routines, thresholds, and captured data. The EEPROM stores data and allows individual bytes to be erased and reprogrammed by applying programming signals. The processor 112 may include other examples of nonvolatile memory, such as flash memory, read-only memory (ROM), programmable read-only memory (PROM), and erasable programmable read-only memory (EPROM). The processor 112 may include volatile memory, such as dynamic random-access memory (DRAM), static random-access memory (SRAM). The one or more routines may be executed by the processor to perform steps for determining the characteristic of the camera 102 based on signals received by the processor 112 from the camera 102 and the moveable fixture 106 as described herein.

### EXAMPLE MODULATION TRANSFER FUNCTION (MTF)

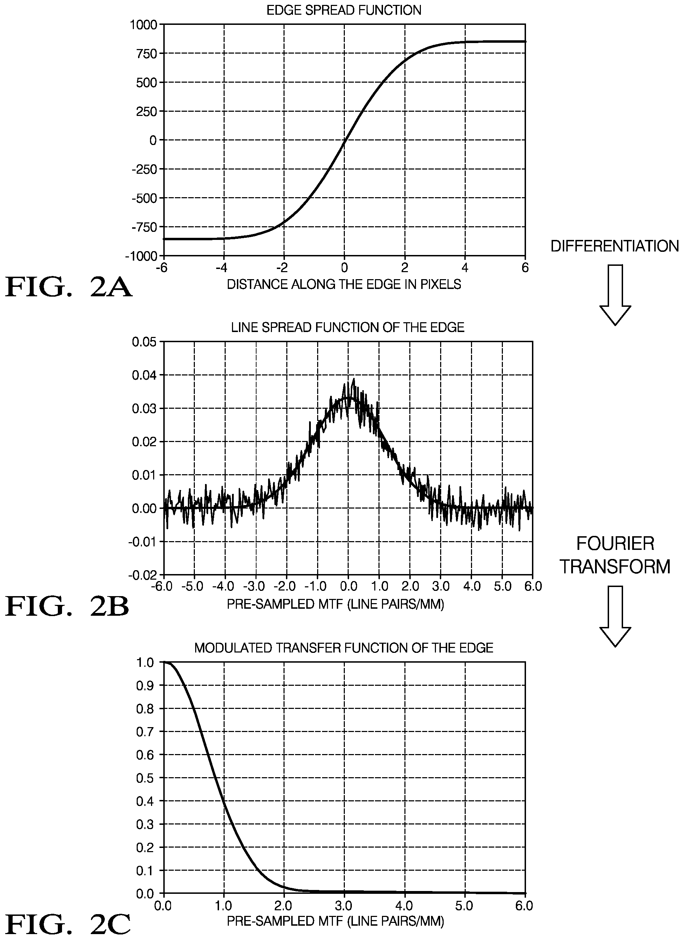

FIGS. 2A-2C illustrate an example of the determination of the MTF. In general, the MTF varies inversely with both a spatial frequency of the image features and with the focused distance from an optical axis or boresight of the camera 102. Typically, a larger MTF is considered a desirable feature of the camera 102. The MTF of the camera 102 is a measurement of the camera's 102 ability to transfer contrast at a particular resolution from the object to the image and enables the incorporation of resolution and contrast into a single metric. For example, as line spacing between two parallel lines or line pairs on a test target decreases (*i.e.*, the spatial frequency increases), it becomes more difficult for the camera lens to efficiently transfer the change in contrast to an image sensor of the camera 102. In another example, for a test target having a given spacing between line pairs and imaged at two positions in the field of view, the camera has more difficulty resolving the line pairs for the target imaged a distance away from the optical axis. As a result, the MTF decreases, or in other words, an area under a curve of a plot of the MTF decreases.

The MTF is a modulus or absolute value of an optical transfer function (OTF), and the MTF can be determined in various ways. In an example, the MTF is a two-dimensional Fourier transform (see FIG. 2C) of the imaging system's line spread function (LSF) taken from an edge spread function (ESF) of a slant edge target 110. Slant edge targets 110 may be used to measure the MTF and are defined by an International Organization for Standardization (ISO) 12233 requirement for spatial resolution measurements of cameras. The LSF (see FIG. 2B) is a normalized spatial signal distribution in the linearized output of the imaging system resulting from imaging a theoretical and infinitely thin line. The ESF (see FIG. 2A) is a normalized spatial signal distribution in the linearized output of an imaging system resulting from imaging a theoretical and infinitely sharp edge. The LSF is determined by taking a first derivative of the ESF. FIGS. 2A-2C illustrate example plots of a progression from the ESF to the MTF. An aspect of the determination of the MTF measurement is that the edges of the slant edge target 110 being imaged by the camera 102 are oriented off-axis from horizontal and vertical axes of the camera's 102 field of view 104. That is, the edges of the target 102 are not aligned or overlaid with the horizontal and vertical reference axes of the field of view 104 so that the boundary from light to dark does not align with the rows and columns of pixels (*e.g.*, the pixel axes) of the image sensor of the camera 102. This off-axis alignment may be achieved by rotating the target 110 relative to the field of view 104 in a range from about 5-degrees to about 20-degrees relative to the horizontal axis of the field of view 104, and in a range from about 5-degrees to about 20-degrees relative to the vertical axis of the field of view 104 (hereafter referred to as the desired off-axis measurement range). This range of rotation is needed due to the MTF measurement using two planes of focus; a sagittal plane (horizontal plane) and a tangential plane (vertical plane) that is orthogonal or normal to the sagittal plane. When the edges of the target 110 are less than about 5-degrees to the reference axes of the field of view 104 to sample the sagittal plane and/or sample the tangential plane, the Fourier transform calculation goes to infinity, and the MTF measurement cannot be made. On the other hand, when the edges of the target are greater than about 20 degrees to the horizontal and vertical reference axes, the MTF calculation may combine the horizontal plane with the vertical plane and confound the MTF measurement.

### EXAMPLE MOVEABLE FIXTURE

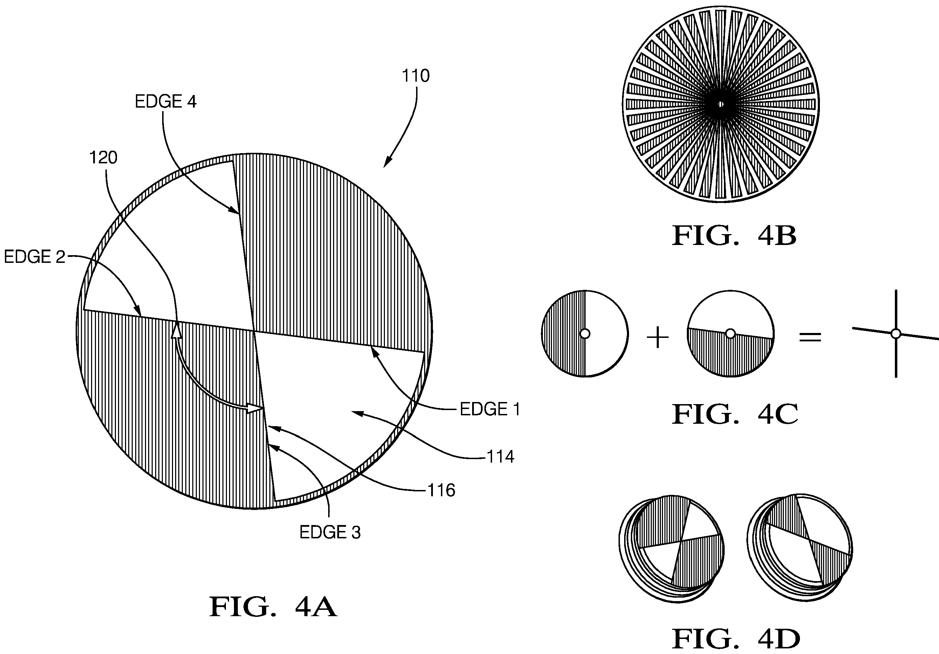

FIGS. 3A-3C illustrate three views of an example of the moveable fixture 106 isolated from the device 100 of FIG. 1. A cover of the moveable fixture 106 is shown as a transparent layer for illustration purposes. In this example, the moveable fixture 106 is operable to position a single target 110 retained by the moveable fixture 106 in the field of view 104 of the camera 102. The use of the single target 110 is advantageous because multiple, unique targets are not needed to compensate for image distortion, as are typically used in other MTF measurement techniques. In this example, the target 110 is a type of slant edge target 110 with an hourglass shape, and a face 114 of the target 110 has linear regions of interest 116 (*e.g.*, straight lines, edges) defined by alternating light and dark regions of the target 110. Other target shapes are envisioned, including a star target (*e.g.*, a Siemens star (see FIG. 4B)), a half-circle target that is rotated between images to obtain two intersecting lines (see FIG. 4C), and an adjustable angle hourglass target where two hourglass targets are overlaid and rotated relative to one another to adjust an angle between the edges (see FIG. 4D).

Referring back to FIG. 1, the moveable fixture 106 is configured to position the face 114 in a plane that is normal to lines of sight 118 of the camera 102 at any position within the field of view 104. That is, the face 114 may be positioned by the moveable fixture 106 such that the face 114 is perpendicular to any line of sight 118. Positioning the face 114 normal to the line of sight 118 reduces errors in the measurement of the MTF because the target 110 is most accurately sampled by measuring the target 110 normal to a field angle radius or line of sight. As mentioned previously, the light rays of the image are focused in two planes: the tangential plane, which is normal to a lens plane and the sagittal plane, which is normal to the tangential plane. The tangential plane focuses across the horizontal plane, and the sagittal plane focuses across the vertical plane. In order to determine the image quality for the entire image, field positions around the image have varying combinations of both the tangential and sagittal focusing planes. As such, to measure the quality of the tangential plane focus, a vertical edge is needed, and to measure the quality of the sagittal plane focus, a horizontal edge is needed. In an example, the moveable fixture 106 is configured to position the center of the target 110 at a same radial distance from the camera 102 at all positions in the field of view 104. In this example, the moveable fixture 106 moves the target 110 along an arc from one position to the next with the radius of the arc remaining constant.

Referring back to FIGS. 3A and 3B, the moveable fixture also includes a target holder 122 configured to retain the target 110 and enable the moveable fixture 106 to rotate the target 110 about the center of the face 114. The moveable fixture 106 is configured to rotate the target 110 from zero degrees through 360-degrees about the center of the face 114 to adjust the angle of the linear regions of interest 116 relative to the horizontal axis and the vertical axis of the field of view 104, thereby enabling the determination of the MTF. The moveable fixture 106 is configured to rotate the target such that the linear regions of interest 116 are positioned from about five degrees to about 20 degrees relative to one of zero degrees vertical and zero degrees horizontal, for the reasons described above to determine the MTF. In an example, the target holder 122 is rotated by a rotary actuator 124 included in the moveable fixture 106. In this example, a perimeter of the target holder 122 includes teeth that engage a gear mounted to a shaft of the rotary actuator that controls the angle of rotation based on inputs from the processor 112. The processor 112 is configured to determine the rotation angle of the target at any position within the field of view and automatically index the rotation angle via the rotary actuator 124 so that the target edges are within the desired off-axis measurement range, as described above.

The moveable fixture 106 also includes an adjustable intermediate optic 126 disposed between the target 110 and the camera 102, and a linear actuator 128 configured to adjust a focal length of the adjustable intermediate optic 126 from about 2 millimeters (mm) to about 16 mm. This range of focal length adjustment simulates an effective focus distance of about 10 meters (m) to 150 m in the actual vehicle application and enables testing in the test cell at reduced distances compared to the actual field distances. An advantage of having the adjustable intermediate optic 126 included in the moveable fixture 106 is that the adjustable intermediate optic 126 remains outside of the environmental chamber and is not exposed to harsh environmental conditions, such as thermal cycling and humidity, that may negatively affect the optics or operation of the linear actuator 128. In an example, a magnification of the adjustable intermediate optic 126 combines with the magnification of the camera lens, yielding a combined system magnification that may be used to simulate a particular target distance.

The moveable fixture 106 also includes a backlight 130 to illuminate the target 110. The backlight 130 projects visible light through transparent portions of the target 110 such that the camera 102 may more readily detect the sharp transitions between light and dark regions of the target 110. In an example, the backlight emits a wide-spectrum visible light with a light temperature of about 6,000 Kelvin (K). The processor 112 may control a brightness or intensity of the backlight 130 to enhance the image captured by the camera 102 based on the position of the target 110 and/or the focal length of the adjustable intermediate optic 126.

### EXAMPLE TARGET

FIG. 4A illustrates an example design of the slant edge target 110 having the hourglass shape that is retained by the moveable fixture 106. In this example, the target 110 is formed of a glass substrate with low reflectivity, for example, soda-lime glass or opal, with the darker regions being formed of chromium deposited by various methods, for example chemical vapor deposition (CVD) and physical vapor deposition (PVD). Photolithography techniques may be used to remove a portion of the deposited chromium to create the hourglass shape and to ensure a sharp transition between the opaque chromium mask and the transparent glass substrate. The target 110 is configured to be backlit to allow light to pass through the glass substrate in the regions absent the less transmissive chromium mask. As can be seen in FIG. 4A, the target 110 includes four straight edges. The target has the hourglass shape with opposing edges aligned into co-linear pairs. For example, Edge 1 and Edge 2 are co-linear pairs aligned to form a first continuous line, and Edge 3 and Edge 4 are co-linear pairs aligned to form a second continuous line. The first continuous line and the second continuous line intersect at the center of the target 110. These continuous lines form the linear regions of interest 116 described above. In an example, an included angle 120 between adjacent Edges 2 and 3 of the target 110 is between 50 degrees and 130 degrees. In the example illustrated in FIG. 4A, the included angle 120 is 105 degrees. In this example, the included angle 120 of 105 degrees is selected based on simulations that indicate more occurrences of placing the linear ROI 116 into the desired off-axis measurement range using the 105-degree included angle 120 with a single-rotation angle, compared to targets 110 with other included angles.

### EXAMPLE IMAGE DISTORTION

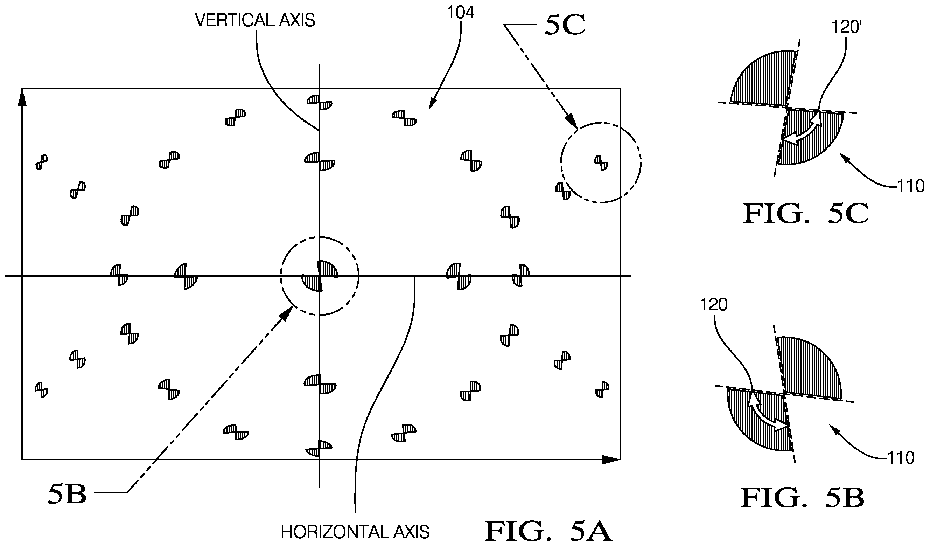

FIG. 5A illustrates an example of barrel distortion of an example camera lens at different regions within the field of view 104 of the camera 102. Barrel distortion is a form of radial distortion where the image magnification decreases with the distance from the optical axis. The effect is that of an image which has been mapped around a sphere or barrel. FIG. 5A shows multiple images of identical, slant edge targets 110 placed at various positions by the device 100 across the field of view 104. In this example, the identical targets 110 have the included angle 120 of 105 degrees, and the target 110 in the center of the image (*e*.*g*., centered near the optical or principal axis of the lens) is substantially undistorted. FIG. 5B illustrates the target 110 imaged at the center of the field of view 104, and FIG. 5C illustrates the target 110 imaged at a position near a limit of the field of view 104 (*e.g.*, at the upper right corner of the field of view 104). As can be seen in FIG. 5C, the lens distortion effectively reduces the included angle 120 between the edges of the target 110 but does not alter a straightness of the lines defined by the edges. That is, the lens distortion creates an apparent included angle 120' as perceived by the image sensor that appears to be an angle less than 105 degrees. A result of this apparent included angle 120' is that the edges of the target may not be within the desired off-axis measurement range (*e*.*g*., within 5 degrees to 20 degrees of the vertical and horizontal axes) to enable the accurate MTF measurement, as described above. The processor 112 compensates for this distortion by determining the rotation angle needed to place the edges of the target 110 within the desired off-axis measurement range, based on the position of the target 110 in the field of view 104, and based on the known distortion characteristics of the particular camera lens or imaging system under test, the focal length of the camera lens, the focus distance of the camera lens and the adjustable intermediate optic, and the image sensor focal plane size. The processor 112 may calculate the rotation angle in real-time or may access a look-up table stored in the memory with the rotation angles predetermined for each position in the field of view 104. The processor 112 controls the rotary actuator 124 to rotate the target 110 to bring the edges into the desired off-axis measurement range, thereby enabling the determination of the MTF at the current target position. The processor 112 is further configured to adjust the positions of the target 110 in the field of view 104 by controlling the moveable fixture 106 and/or the robotically controlled arm 108 and repeat the determination the MTF at the new positions until a mapping sequence for the field of view 104 is completed.

### EXAMPLE TARGET ROTATION

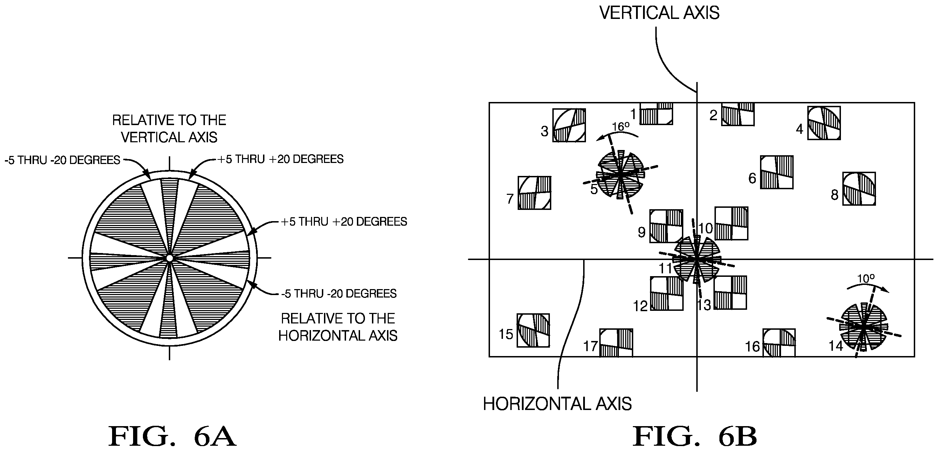

FIG. 6A illustrates a rotation template that will be used to explain examples of target 110 rotation by the processor 112. The template is shown to illustrate different rotations angles that may be applied to targets 110 at various positions within the field of view 104. The template has horizontal and vertical axes that align with the horizontal and vertical reference axes of the field of view 104. Wedge-shaped regions of the template with no shading indicate angles of rotation between 5 degrees and 20 degrees (*e.g.*, the desired off-axis measurement range) and are positioned in all four quadrants of the template. That is, the non-shaded regions indicate rotation angles of 5 degrees to 20 degrees off the vertical and horizontal axes, and -5 degrees to -20 degrees off the vertical and horizontal axes. Shaded wedge-shaped regions indicate angles of rotation outside of the desired off-axis measurement range.

FIG. 6B illustrates seventeen backlit targets 110 imaged at various positions in the field of view 104. Each of the seventeen targets 110 has the 105-degree included angle 120, and the targets away from the center of the field of view 104 have varying amounts of distortion resulting in varying apparent included angles 120'. The dashed lines overlaid on target numbers 5, 11, and 14 indicate the linear regions of interest 116 for three targets 110, and arrows above target numbers 5 and 14 indicate the direction (*e*.*g*., clockwise (CW), or counterclockwise (CCW)) the target 110 is rotated by the processor 112. Referring first to target number 5, the processor 112 determines that a 16-degree CCW rotation from the target's 110 initial polarization places the linear regions of interest 116 at angles within the desired off-axis measurement range relative to both the vertical and horizontal reference axes. That is, both intersecting lines defined by the edges of the target 110 are rotated to be within the desired off-axis measurement range for the MTF measurement, thereby enabling the processor 112 to determine the MTF. Referring next to target number 11, the processor 112 determines that the linear regions of interest 116 are within the desired off-axis measurement range, and the processor 112 does not rotate the target 110 before measuring the MTF. Referring now to target number 14, the processor 112 determines that a 10-degree CW rotation from the target's 110 initial polarization places the linear regions of interest 116 at angles within the desired range relative to both the vertical and horizontal reference axes and proceeds with measuring the MTF. The processor 112 is configured to select the direction of rotation that places the target in condition for determining the MTF with the smallest rotation angle. That is, processor 112 rotates the target in either direction (CW or CCW) based on the direction with the smallest determined rotation angle, which has the effect of reducing the time needed to complete the mapping of the camera 102.

In the example where a plurality of cameras 102 are mounted in the environmental chamber, the processor 112 is configured to receive image data representing captured images of the target 110 from the plurality of cameras 102, and adjust the position of the target 110 in the fields of view of the plurality of cameras 102. In this example, the processor is further configured to determine the rotation angle of the linear regions of interest 116 viewable on the face 114 of the target 110 to enable the determination of modulation transfer functions (MTF) of the plurality of cameras 102, adjust the rotation angle relative to horizontal axes and vertical axes of the fields of view 104, and determine the MTF of the plurality of cameras 102 based on the linear regions of interest 116. In an example, the processor 112 is configured to complete a mapping of a first camera before moving to a second camera to map the image space of the second camera. In another example, the processor 112 is configured to receive images from the plurality of cameras 102 while the target 110 is in a same region to reduce the amount of movement of the robotically controlled arm 108.

### EXAMPLE PROCESS FLOWS

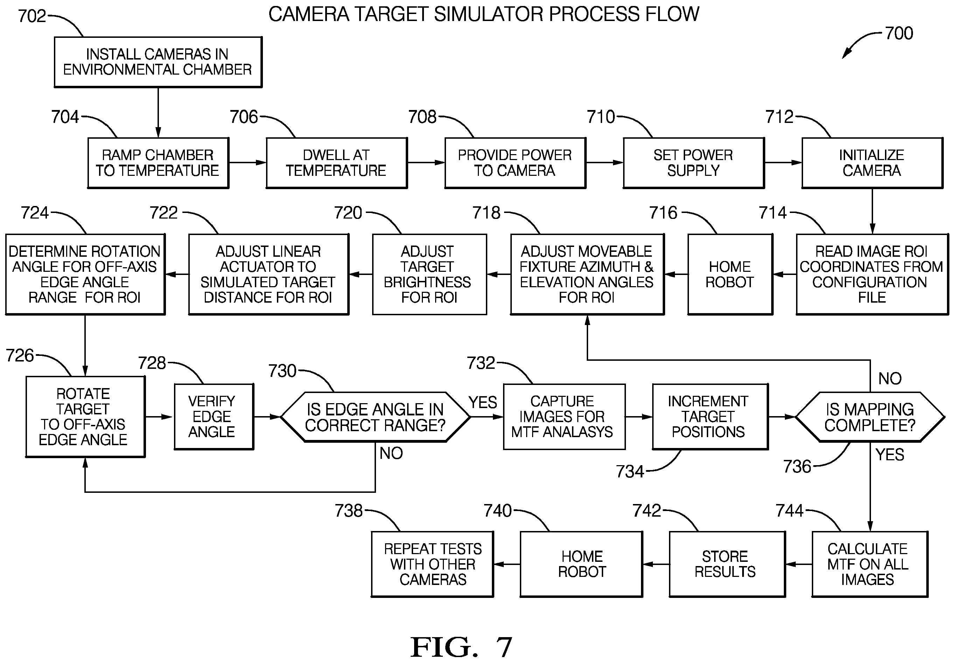

FIGS. 7-9 are example process flow diagrams illustrating additional details for the determination of the MTF. FIG. 7 is an example of an overall process flow 700 starting at 702 with installing the cameras 102 in the environmental chamber and ending at 744 with repeating the MTF measurements on other cameras 102 that may also be installed in the environmental chamber. The linear regions of interest 116 on the target 110 are referred to as "ROI" in the process flow charts. In this example, at 714, the processor 112 reads the coordinate positions from a configuration file that is stored in the memory of the processor 112. The configuration file contains the mapping profile for the camera 102 under test and may be different for each camera 102. At 716 the processor 112 sends the robotically controlled arm 108 to a home or first measurement position in the field of view 104 and at 718 adjusts an azimuth and elevation angles of the target so that the face 114 is perpendicular to the line of sight 118. At 720 the processor 112 controls the backlight 130 to adjust the brightness of the target to a target range due to variations in the imaged brightness caused by the position of the target in the field of view and/or losses from the environmental chamber window. At 722 the processor 112 adjusts the linear actuator to the simulated target distance. At 724 the processor 112 determines the rotation angle for the target 110 to place the ROI in the desired off-axis measurement range, as described above. At 726 the processor 112 controls the rotary actuator 124 to rotate the target 110 to the determined rotation angle and at 728 the processor 112 verifies that the edge angle corresponds to the calculated rotation angle. At 730 if the edge angles are not verified, the processor 112 repeats the rotation and verification steps until the edge angles are in the desired off-axis measurement range. At 732 the processor 112 captures the images from the camera 102 for the MTF analysis and at 734 the processor 112 increments the target position based on the configuration file and repeats the previous steps until the mapping is complete. At 738 the processor 112 calculates the MTF for all images and at 740 the processor 112 stores the results in the memory. At 742 the processor 112 homes the robot. At 744 the processor proceeds to map the image spaces of other cameras 102 that may be installed in the environmental chamber.

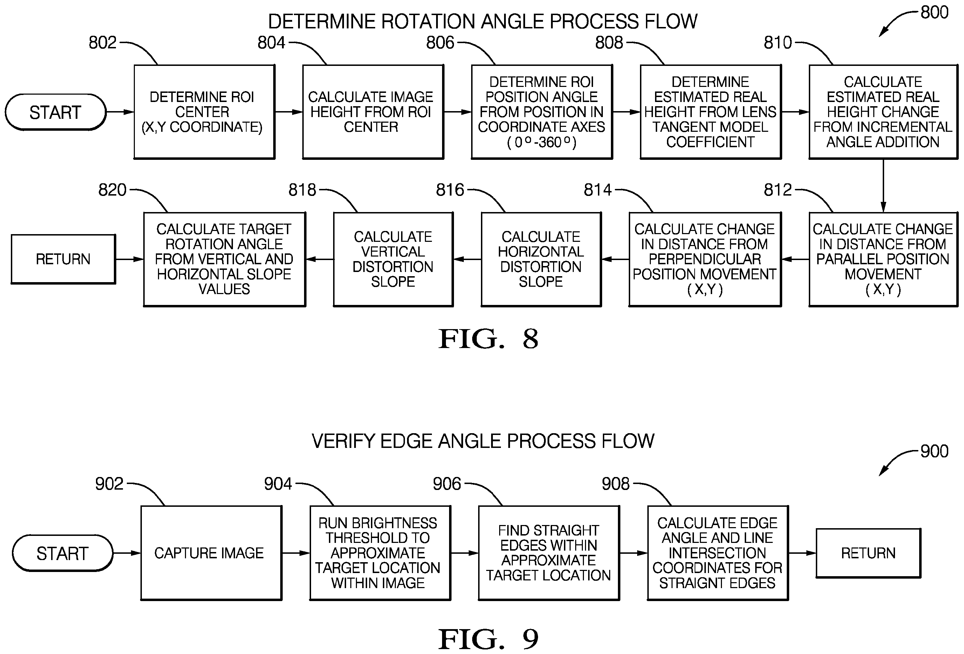

FIG. 8 is a process flow diagram 800 providing further examples for determining the rotation angle. At 802 the processor 112 determines the coordinates on the image sensor corresponding to the center of the ROI, where the lines defined by the target 110 intersect with one another. At 804 the processor calculates an image height of the center of the ROI relative to the image sensor coordinate axis. The image height is the radial distance on the image sensor from the center of the image sensor to the center of the target 110 image. At 806 the processor 112 determines a position angle on the image sensor of the center of the ROI using a two-dimensional polar coordinate system. At 808 the processor 112 uses a tangent model approximation along with the camera lens distortion characteristics supplied by the lens manufacturer to estimate a real height of the center of the target and at 810 calculates a change in the real height due to an incremental rotation angle applied to the target 110. At 812 and 814 the processor 112 determines the change in distance of the center of the ROI due to movement along the horizontal and vertical axes of the image sensor (*e*.*g*., parallel and perpendicular movement from the previous position). From this change in distance, at 816 and 818 the processor 112 determines a horizontal distortion slope and a vertical distortion slope, which indicate a rate of change of the distortion as a function of the distance away from the center of the image sensor. From these distortion slopes, at 820 the processor 112 determines the rotation angle needed to place the ROI in the desired off-axis measurement range for the MTF measurements.

FIG. 9 is a process flow diagram 900 providing further examples for verifying the edge angle. At 902 the processor 112 captures the image of the target 110. The light and dark regions of the target 110 have high contrast compared to the remainder of the image, which enables the processor 112 at 904 to apply a brightness threshold value to approximate the target 110 location within the image. At 906 the processor 112 detects the straight lines defined by the edges of the target 110 and at 908 the processor 112 calculates the edge angles and line intersection coordinates for the edges.

### EXAMPLE METHOD

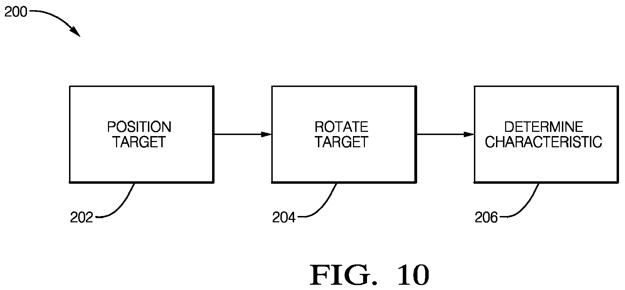

FIG. 10 illustrates example methods 200 performed by the device 100. For example, the processor 112 configures the device 100 to perform operations 202 through 206 by executing instructions associated with the processor 112. The operations (or steps) 202 through 206 are performed but not necessarily limited to the order or combinations in which the operations are shown herein. Further, any of one or more of the operations may be repeated, combined, or reorganized to provide other operations.

Step 202 includes POSITION TARGET. This can include positioning, with a moveable fixture 106, a target 110 in a field of view 104 of one or more cameras 102, as described above. A face 114 of the target 110 has linear regions of interest 116 and is positioned normal to a line of sight 118 of the camera 102. The moveable fixture 106 positions the target 110 in the field of view 104 at a first distance from the one or more cameras 102 that is representative of a second distance in a vehicle coordinate system, as described above. In an example, the moveable fixture 106 includes an adjustable intermediate optic 126 disposed between the target 110 and the camera 102 configured to adjust a focal length of a lens of the adjustable intermediate optic from about 2 mm to about 16 mm. In an example, the moveable fixture 106 is configured to position a single target 110 within the field of view 104, as described above. In an example, the target 110 has an hourglass shape with an included angle 120 between adjacent edges of the target 110 between 50 degrees and 130 degrees. In another example, the included angle 120 is 105 degrees, as described above. In other examples, the target 110 is one of a star target, a half-circle target, and an adjustable angle hourglass target, as described above. In an example, a processor 112 is communicatively coupled with the moveable fixture 106 and the one or more cameras 102. The processor 112 is configured to receive image data from the one or more cameras 102, representing a captured image of the target 110 retained by the moveable fixture 106. The processor 112 is also configured to control the moveable fixture 106 to position the target 110 in any location in the field of view 104.

Step 204 includes ROTATE TARGET. This can include rotating, with the moveable fixture 106, the target 110 about a center of the face 114 to adjust an angle of the linear regions of interest 116 relative to a horizontal axis and a vertical axis of the field of view 104. In an example, the moveable fixture 106 rotates the target 110 from about 5 degrees to about 20 degrees relative to one of zero degrees vertical and zero degrees horizontal (*e*.*g*., the desired off-axis measurement range). In an example, the processor 112 determines the rotation angle of the target 110 based on known distortion characteristics of the particular camera lens, the focal length of the lens, the focus distance, and the image sensor focal plane size, as described above. In an example, the processor 112 controls a rotary actuator 124 to rotate the target 110 to the determined rotation angle such that the linear regions of interest 116 are within the desired off-axis measurement range.

Step 206 includes DETERMINE CHARACTERISTIC. This can include determining a characteristic of the camera 102 based on the linear regions of interest 116. In an example, the characteristic is a modulation transfer function (MTF), as described above. In an example, the processor 112 determines the MTF by performing a two-dimensional Fourier transform of the imaging system's line spread function (LSF) taken from an edge spread function (ESF) of the slant edge target 110, as described above.

### EXAMPLES

In the following section, examples are provided.

Example 1. A device, comprising a moveable fixture operable to position a target in a field of view of a camera, a face of the target having linear regions of interest and being normal to a line of sight of the camera, the moveable fixture being configured to rotate the target about a center of the face to adjust an angle of the linear regions of interest relative to a horizontal axis and a vertical axis of the field of view, thereby enabling a determination of a characteristic of the camera based on the linear regions of interest.

Example 2. The device of the previous example, wherein the characteristic is a modulation transfer function (MTF).

Example 3. The device of any of the previous examples, wherein the moveable fixture is operable to position the target in the field of view of the camera by positioning the target at a first distance from the camera.

Example 4. The device of any of the previous examples, wherein the first distance is representative of a second distance in a vehicle coordinate system.

Example 5. The device of any of the previous examples, wherein the moveable fixture is configured to rotate the target from about 5 degrees to about 20 degrees relative to one of zero degrees vertical and zero degrees horizontal.

Example 6. The device of any of the previous examples, wherein the target comprises an hourglass-shaped target with opposing edges aligned into co-linear pairs.

Example 7. The device of any of the previous examples, wherein an included angle between adjacent edges of the target is between 50 degrees and 130 degrees.

Example 8. The device of any of the previous examples, wherein the included angle is 105 degrees.

Example 9. The device of any of the previous examples, wherein the target comprises one of a star target, a half-circle target, and an adjustable angle hourglass target.

Example 10. The device of any of the previous examples, wherein the moveable fixture is configured to position a single target within the field of view of the camera.

Example 11. The device of any of the previous examples, wherein the moveable fixture includes an adjustable intermediate optic disposed between the target and the camera.

Example 12. The device of any of the previous examples, wherein the adjustable intermediate optic is configured to adjust a focal length of a lens of the adjustable intermediate optic from about 2 millimeters (mm) to about 16 mm.

Example 13. The device of any of the previous examples, wherein the device further includes a processor in communication with the moveable fixture and the camera, the processor configured to: receive image data from the camera representing a captured image of the target; adjust a position of the target in the field of view of the camera; determine a rotation angle of the target based on the position to enable the determination of the characteristic of the camera; adjust the rotation angle; and determine the characteristic of the camera based on the linear regions of interest.

Example 14. A method, comprising: positioning, with a moveable fixture, a target in a field of view of a camera, a face of the target having linear regions of interest and being normal to a line of sight of the camera; and rotating, with the moveable fixture, the target about a center of the face to adjust an angle of the linear regions of interest relative to a horizontal axis and a vertical axis of the field of view, thereby enabling a determination of a characteristic of the camera based on the linear regions of interest.

Example 15. The method of the previous example, wherein the characteristic is a modulation transfer function (MTF).

Example 16. The method of any of the previous examples, wherein the moveable fixture positions the target in the field of view of the camera by positioning the target at a first distance from the camera, and wherein the first distance is representative of a second distance in a vehicle coordinate system.

Example 17. The method of any of the previous examples, wherein the moveable fixture rotates the target from about 5 degrees to about 20 degrees relative to one of zero degrees vertical and zero degrees horizontal.

Example 18. The method of any of the previous examples, wherein the moveable fixture includes an adjustable intermediate optic disposed between the target and the camera, the adjustable intermediate optic configured to adjust a focal length of a lens of the adjustable intermediate optic from about 2 mm to about 16 mm.

Example 19. The method of any of the previous examples, further including: receiving, with a processor in communication with the moveable fixture and the camera, image data from the camera representing a captured image of the target, adjusting, with the processor, a position of the target in the field of view of the camera, determining, with the processor, a rotation angle of the target based on the position of the target to enable the determination of the characteristic of the camera, adjusting, with the processor, the rotation angle, and determining, with the processor, the characteristic of the camera based on the linear regions of interest.

Example 20. The method of any of the previous examples, wherein an included angle between adjacent edges of the target is between 50 degrees and 130-degrees.

Example 21. The method of any of the previous examples, wherein the included angle is 105 degrees.

Example 22. The method any of the previous examples, wherein the target comprises one of a star target, a half-circle target, and an adjustable angle hourglass target.

Example 23. The method of any of the previous examples, wherein the moveable fixture is configured to position a single target within the field of view of the camera.

Example 24. The method of any of the previous examples, wherein the moveable fixture includes an adjustable intermediate optic disposed between the target and the camera.

Example 25. The method of any of the previous examples, wherein the adjustable intermediate optic is configured to adjust a focal length of a lens of the adjustable intermediate optic from about 2 mm to about 16 mm.

Example 26. The method any of the previous examples, wherein the device further includes a processor in communication with the moveable fixture and the camera, the processor configured to: receive image data from the camera representing a captured image of the target; adjust a position of the target in the field of view of the camera; determine a rotation angle of the target based on the position to enable the determination of the characteristic of the camera; adjust the rotation angle; and determine the characteristic of the camera based on the linear regions of interest.

Example 27. A system, comprising: a processor configured to: receive image data representing captured images of a target from a plurality of cameras, adjust a position of the target in fields of view of the plurality of cameras, determine a rotation angle of linear regions of interest viewable on a face of the target to enable a determination of modulation transfer functions (MTF) of the plurality of cameras, adjust the rotation angle relative to horizontal axes and vertical axes of the fields of view, and determine the MTF of the plurality of cameras based on the linear regions of interest.

While various embodiments of the disclosure are described in the foregoing description and shown in the drawings, it is to be understood that this disclosure is not limited thereto but may be variously embodied to practice within the scope of the following claims. From the foregoing description, it will be apparent that various changes may be made without departing from the spirit and scope of the disclosure as defined by the following claims.

The use of "or" and grammatically related terms indicates non-exclusive alternatives without limitation unless the context clearly dictates otherwise. As used herein, a phrase referring to "at least one of' a list of items refers to any combination of those items, including single members. As an example, "at least one of: a, b, or c" is intended to cover a, b, c, a-b, a-c, b-c, and a-b-c, as well as any combination with multiples of the same element *(e.g.,* a-a, a-a-a, a-a-b, a-a-c, a-b-b, a-c-c, b-b, b-b-b, b-b-c, c-c, and c-c-c or any other ordering of a, b, and c).

## Claims

1. A method, comprising:
positioning, with a moveable fixture, a target in a field of view of a camera, a face of the target having linear regions of interest and being normal to a line of sight of the camera; and
rotating, with the moveable fixture, the target about a center of the face to adjust an angle of the linear regions of interest relative to a horizontal axis and a vertical axis of the field of view, thereby enabling a determination of a characteristic of the camera based on the linear regions of interest.

2. The method of claim 1, wherein the characteristic is a modulation transfer function (MTF).

3. The method of any of the preceding claims, wherein positioning the target in the field of view of the camera comprises positioning the target at a first distance from the camera, and wherein the first distance is representative of a second distance in a vehicle coordinate system.

4. The method of any of the preceding claims, wherein rotating the moveable fixture comprises rotating the target from about 5 degrees to about 20 degrees relative to one of zero degrees vertical and zero degrees horizontal.

5. The method of any of the preceding claims, wherein the moveable fixture includes an adjustable intermediate optic disposed between the target and the camera, the adjustable intermediate optic configured to adjust a focal length of a lens of the adjustable intermediate optic from about 2 mm to about 16 mm.

6. The method of any of the preceding claims, further including:
receiving, with a processor in communication with the moveable fixture and the camera, image data from the camera representing a captured image of the target;
adjusting, with the processor, a position of the target in the field of view of the camera;
determining, with the processor, a rotation angle of the target based on the position of the target to enable the determination of the characteristic of the camera;
adjusting, with the processor, the rotation angle; and
determining, with the processor, the characteristic of the camera based on the linear regions of interest.

7. The method of any of the preceding claims, wherein the moveable fixture is comprised in a device.

8. The method of any of the preceding claims, wherein the target comprises one or more of a star target, a half-circle target, an adjustable angle hourglass target, or an hourglass-shaped target with opposing edges aligned into co-linear pairs.

9. The method of any of the preceding claims, wherein an included angle between adjacent edges of the target is between 50 degrees and 130 degrees.

10. The method of any of the preceding claims, wherein, wherein the included angle is 105 degrees.

11. The method of any of the preceding claims, wherein, wherein the moveable fixture is configured to position a single target within the field of view of the camera.

12. The method of any of the preceding claims, wherein the moveable fixture includes an adjustable intermediate optic disposed between the target and the camera.

13. The method of any of the preceding claims, wherein the adjustable intermediate optic is configured to adjust a focal length of a lens of the adjustable intermediate optic from about 2 millimeters (mm) to about 16 mm.

14. A device comprising a moveable fixture and a processor that are configured to perform the method of any of the preceding claims.

15. A system comprising means for performing the method of any of the preceding claims.
